(19) **Europäisches Patentamt European Patent Office Office européen des brevets**

(11) **EP 2 856 584 B1**

(12) **EUROPEAN PATENT SPECIFICATION**

(45) Date of publication and mention of the grant of the patent:
**20.05.2020 Bulletin 2020/21**

(51) Int Cl.:
*H01S 3/10* (2006.01)       *G02B 5/20* (2006.01)
*G02B 6/38* (2006.01)       *G02B 6/42* (2006.01)
*G02B 6/26* (2006.01)       *G02B 27/46* (2006.01)
*G02B 6/32* (2006.01)

(21) Application number: **13796437.5**

(22) Date of filing: **29.05.2013**

(86) International application number:
**PCT/US2013/042982**

(87) International publication number:
**WO 2013/181183 (05.12.2013 Gazette 2013/49)**

(54) **HIGH POWER SPATIAL FILTER**

LEISTUNGSSTARKER RAUMFILTER

FILTRE SPATIAL À HAUTE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2012 US 201261653089 P**

(43) Date of publication of application:
**08.04.2015 Bulletin 2015/15**

(60) Divisional application:
**19215362.5 / 3 640 691**

(73) Proprietors:
• **IPG Photonics Corporation**
  **Oxford, Massachusetts 01540 (US)**
• **Berishev, Igor**
  **Oxford, MA 01540 (US)**
• **Chuyanov, Vadim**
  **Oxford, MA 01540 (US)**
• **Komissarov, Alexey**
  **Oxford, MA 01540 (US)**
• **Strougov, Nikolai**
  **Oxford, MA 01540 (US)**

(72) Inventors:
• **BERISHEV, Igor**
  **Oxford, MA 01540 (US)**
• **CHUYANOV, Vadim**
  **Oxford, MA 01540 (US)**
• **KOMISSAROV, Alexey**
  **Oxford, MA 01540 (US)**
• **STROUGOV, Nikolai**
  **Oxford, MA 01540 (US)**

(74) Representative: **Kobiako von Gamm, Iouri**
  **Kobiako-von Gamm**
  **Patent- und Rechtsanwaltskanzlei**
  **PartG mbB**
  **Bruckmannstraße 13**
  **80638 München (DE)**

(56) References cited:
EP-A1- 1 033 597        JP-A- 2002 131 589
JP-A- 2004 177 937      US-A- 5 243 681
US-A- 5 751 869         US-A1- 2004 071 409
US-A1- 2006 244 956     US-A1- 2007 172 174
US-A1- 2010 303 419

## Description

## BACKGROUND OF THE INVENTION

### Field of the Invention

The present invention relates to optical systems operative to filter out high numerical aperture ("NA") rays from laser light propagating through free space.

### Description of the Related Art

To meet current industrial requirements, lasers in general including solid and fiber lasers become more and more powerful. High light powers however often should be attained without degrading the quality of laser light. Propagation of laser light through free space in various configurations of fiber laser systems is customary. For example, pigtailed optical components of fiber laser systems, such as isolators, circulators and the like, are configured with light path stretches requiring light to propagate via free space. Still another optical configuration requiring light propagation via free space includes laser diode modules typically operating as pumps sources. A laser diode module typically has a plurality of laser diodes which emit respective beams. The beams are further collimated and focused on the entry faucet of a multimode ("MM") delivery fiber which further guides pump light to fiber gain blocks.

The coupling of the focused light into an optical fiber is of importance in general and, in particular, when a laser diode module functions as pump for fiber laser systems capable of emitting laser light. The progress observed in various industries, as a rule, requires increasingly high laser beam powers with a high quality of the laser beam.

Meeting this requirement is so-called high power fiber laser systems typically including one or multiple diode pump modules. The generated pump light is then coupled into one or multiple gain blocks. A gain block is configured with an active fiber typically having a multimode ("MM") core which is structured to support substantially only a fundamental mode ("FM") at the desired wavelength. Input and output single mode ("SM") passive fibers, coupled to respective opposite ends of the active fiber, typically complete a fiber unit of gain block.

A pump laser diode module for a high power laser system is configured as a pigtailed optical element, i.e., the element with an optical fiber coupled thereto. Accordingly, focused MM light from a plurality of emitters is coupled into a MM passive fiber which, true to its definition, supports multiple transverse modes including the most powerful, fundamental mode. The modes "compete" for a given power. With a higher number of HOMs excited in the MM passive fiber, the power of the fundamental mode lowers.

The power loss of the delivered fundamental mode greatly affects the overall efficiency of the high power fiber laser system disclosed above. Accordingly, it is desirable that the fundamental mode delivered by the MM passive fiber be maximally powerful which can be achieved by reducing the number of HOMs.

There are several factors influencing the number of excited HOMs. For example, during the coupling process of the focused light into MM passive fiber, most of the light enters into the MM core. Such light predominantly excites central core modes with the intensity of the light power aligned around the core region of the optical fiber which is mainly occupied by a fundamental mode and a few central HOMs.

But some laser light rays with respective large numerical apertures, i.e., rays that propagate at relatively great angles with respect to the optical axis of the fiber, stray away from and are not well aligned with the MM core. Such stray rays may excite a great deal of peripheral core HOM typically propagating along the core/cladding interface and cladding modes of the fiber. These peripheral HOMs also reduce the power and quality of the fundamental mode and, in addition, quite often tend to couple out of the fiber presenting environmental hazard. In particular, a protective polymeric layer shielding a fiber from mechanical stresses, may be easily damage which often leads to irreparable damages to the fiber itself. In addition, decoupled light is hazardous to other optical components of a fiber system.

Conventionally an aperture stop or a diaphragm is used to filter away the strayed laser rays from entering into the fiber. This straight forward solution generally works well for regular free space optics. However, in micro-optics associated with high power pump modules, the aperture stop is more difficult to handle. Therefore, the requirement for high precision in mounting and alignment with respect to the optical fiber axis cannot always be satisfied. The latter, in turn, decreases reliability and reproducibility of laser modules for high volume production.

The excitement of peripheral modes causing the above-discussed undesirable consequences is not exclusively limited to a pump light delivery system. Fiber laser systems often have stretches of light path along which collimated light propagates through free space and then is coupled into a fiber. For example, a termination block has collimating lenses or multi-cascaded high power fiber laser system often includes isolators, circulators and other bulk components configured with free space path stretches before the light is to be coupled into a fiber. In many instances, the coupling of light propagating through into a fiber may have the same problems as disclosed above in regard to a pump light delivery system.

A need, therefore, exists for an improved method of minimizing excitation of peripheral and cladding HOMS in a passive MM fiber receiving MM light travelling via free space.

A further need exists for an optical system implementing the improved method.

## ASPECTS AND SUMMARY OF THE INVENTION

The disclosed optical system satisfies the above-identified needs. In particular, the system is configured with a light source emitting light which further propagates via free space and incident on a focusing optical component. The focused light is further incident on a fiber, which is aligned with the component, and includes small and high NA rays extending at respective angles relative to the component's optical axis. The invention is defined by the accompanying claims.

Disclosed hereinbelow is an improved method for reducing the excitation of the higher high and cladding modes by filtering high numerical aperture stray light rays from light incident on the fiber.

This is realized by disposing the optical fiber tip inside a ferule channel with the fiber's upstream facet spaced inwards at distance from the opening edge of the channel. The end of the ferule impinged by converging high NA light rays is coated with a layer of high reflective coating material, for example, a dielectric or a metal material which reflects high NA rays incident thereon and thus prevents their coupling into the fiber's core.

The distance of the fiber facet for light entering into the fiber to the opening end of the ferule channel at the light coupling intersection is now understood as determined with the following formula: D=$t$/tan (arcsin (NA/n)) where D is the depth the fiber facet into the ferule channel from the opening edge, t is the thickness of the cladding region of the optical fiber, NA is the desired numerical aperture, and n is the reflective index of the medium through which the light travels to the entrance fiber facet.

With this simple design improvement, the need of mounting and aligning an aperture stop is eliminated, which not only increases the reliability of the laser diode pump system, but also reduces the overall cost of manufacturing of the laser diode pump system.

The above and other aspects, features and advantages of the present invention will become apparent from the following description read in conjunction with the accompanying drawings, in which like reference numerals designate the same elements.

## BRIEF DESCRIPTION OF THE DRAWINGS

FIG. 1 diagraphically shows a general laser light coupling process in a high power laser diode pump module in fiber optics.

FIG. 2 is a diagraphically sectional view of a conventional mechanism in laser light coupling to reduce stray light rays from entering an optical fiber in laser fiber optics.

FIG. 3 is a diagraphically sectional view of an improved laser light coupling mechanism for a laser diode pump module in fiber optics in accordance with this application.

FIG.4 is an exploded view of the intersection structure of the laser light coupling process in an example improved high power laser diode pump module in accordance with this application.

FIG. 5 is a schematic view of one embodiment the laser coupling mechanism of FIGs. 3 and 4.

## DETAILED DESCRIPTION OF THE PREFERRED EMBODIMENTS

Reference will now be made in detail to embodiments of the invention. Wherever possible, same or similar reference numerals are used in the drawings and the description to refer to the same or like parts or steps. The drawings are in simplified form and are not to precise scale. For purposes of convenience and clarity only, directional (up/down, etc.) or motional (forward/back, etc.) terms may be used with respect to the drawings. These and similar directional terms should not be construed to limit the scope of the invention in any manner.

An optical fiber is a flexible, transparent fiber made of a glass silica not much wider than a human hair. Optical fibers typically include a transparent core surrounded by a transparent cladding material with a lower index of refraction. Light is kept in the core by total internal reflection. Fibers whose cores support many propagation transverse paths are called multi-mode ("MM") fibers while those that only support a single mode are called single mode ("SM") fibers. SM fibers emit a high quality but relatively low power light beam having a small spot size. MM fibers generally have a larger core diameter than SM fibers, and are used for applications where high power must be transmitted but beam quality requirements are somewhat less stringent than those for SM fibers. Accordingly, when both power and quality requirements for a laser beam are high, it is desirable to use MM fibers which support only few HOMs.

The excitation of modes depends on a variety of factors including, among others, a numerical aperture ("NA"). The NA is commonly used in fiber optics to describe the cone of light accepted into the fiber or exiting it in respect to a point,

$$NA = n \sin \theta$$

where n is the index of refraction of the medium in which the lens is working in, $\theta$ is the half-angle of the maximum cone of light that can enter or exit the fiber from the point.

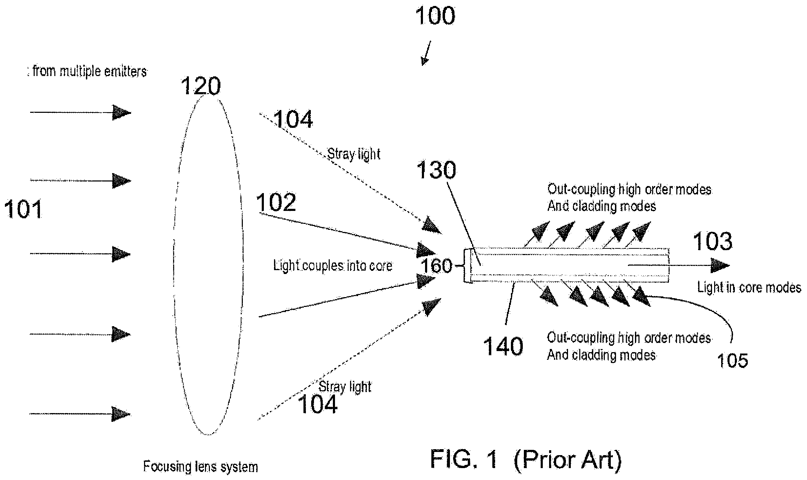

In reference to **Figure 1**, a general light coupling process 100 involving a light source, for example a laser diode module which functions, for example, as a pump source, is described. Parallel laser beams 101 from multiple emitters are incident on a focusing lens system 120 configured to bend the beams to rays 102 which converge at respective different angles or NAs to the focal point of the lens system. A MM passive fiber 160 is typically mounted in a ferrule so that its upstream end is substantially placed in a Rayleigh region of MM beam shaped by lens system 120. After the focusing process of lens system 120, bent light rays with a relatively small NA 102 are predominantly operatively coupled into the core of optical fiber 160 in fundamental and few high order core modes and propagate out as laser light 103. However, stray light rays 104 - rays with higher numerical aperture or greater angle relative to the axis of fiber 160, which typically excite additional high order core modes and cladding modes 105 - are blocked from coupling into the fiber. These additional HOM core and cladding modes may outcouple into the protective layer of fiber 160 and heat it to elevated temperatures that may cause its burning and also detrimentally affect other system components.

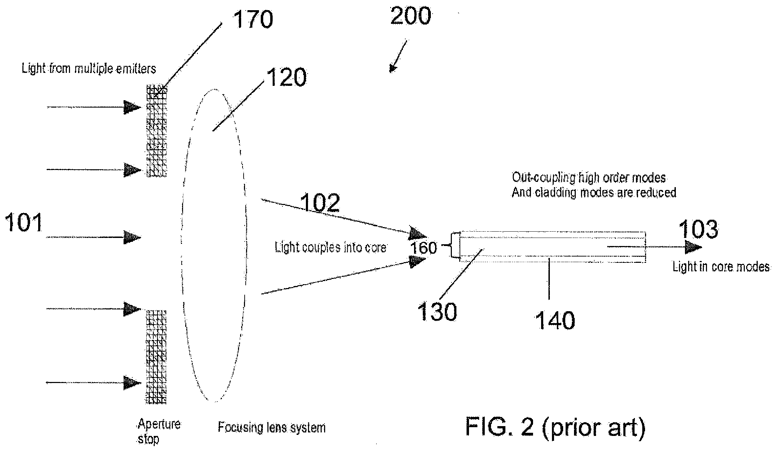

In reference to **Figure 2,** conventionally an aperture stop 170 is added into the light focusing pathway to block the peripheral beams from respective emitters which then bent at large angles from entering focusing lens system 120, only those beams that are further bent to low NA travel rays 102 are allowed to go through the aperture and be coupled into the fiber 160, reducing the amount of cladding modes light rays and high order modes light rays. This is a "classical" straightforward way which is effective for regular free space optics. When dealing with micro-optics, as in case of focusing optical systems for high power pump modules, this method may be not as straightforward. Very often, due to choices of alignment and mounting methods, the centering of the aperture stop with respect to the optical axis of the system can be difficult and not reproducible in the high volume production environment.

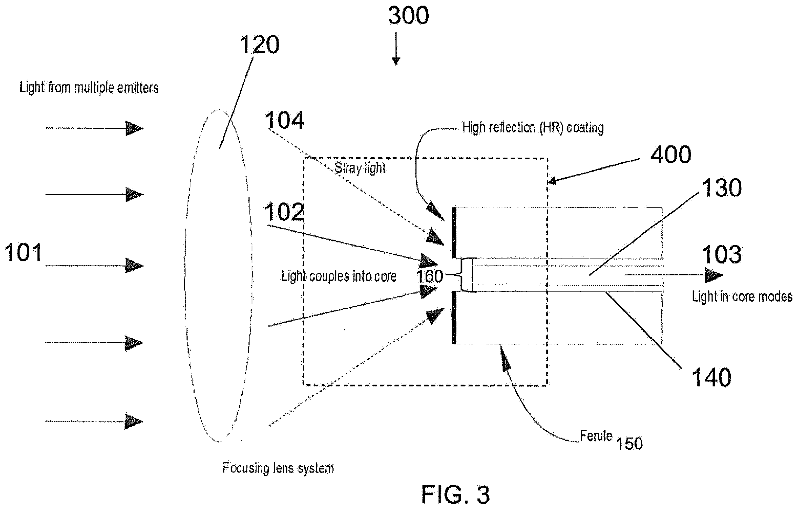

In reference to **Figure 3,** an improved mechanism 300 for light coupling into a fiber 160 from a high power laser diode pump module is shown in a sectional view. The optical fiber 160 is disposed inside ferrule channel 150 with the end of ferrule 150 coated with a layer of high reflection material. The aperture stop 170 shown in Figure 2 is removed, but stray high NA light rays 104 are reflected away from entering into optical fiber 160 by the front end of ferrule 150 instead. This improvement eliminates the necessity of aligning the aperture stop with the optical fiber axis; the placement of the optical fiber inside the ferrule channel is highly reproducible and can be controlled with high precision.

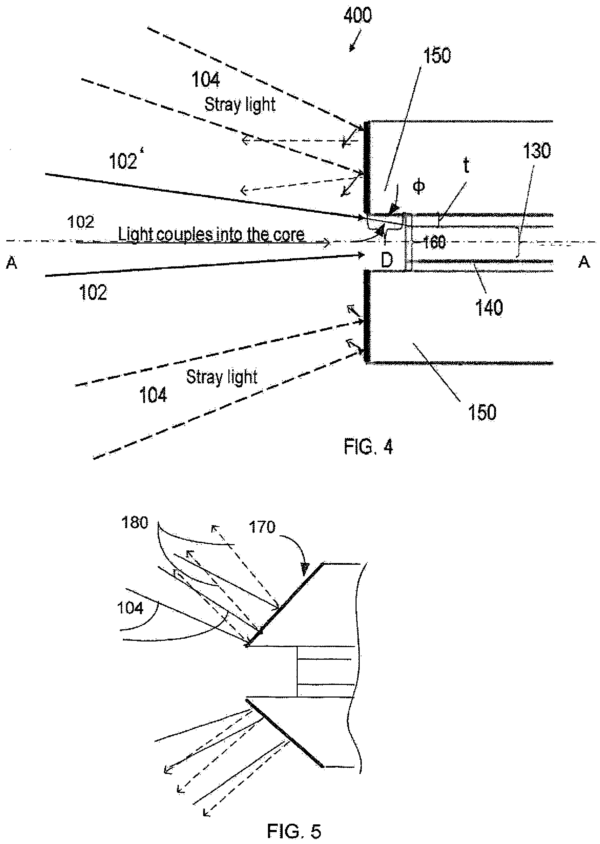

**Figure 4** is an exploded view of area 400 in Figure 3. One or more end surfaces of ferrule 150 that faces the incoming light is coated with a layer of high reflective material 151, for example, a layer of dielectric material or a layer of metal. The optical fiber 160 is disposed inside the ferrule channel 150 with its upstream end lying along a Rayleigh region of the focused beam.

A particular a distance "D" at which the upstream end of the fiber is spaced from the upstream edge of ferule channel 150 can be determined for the desired NA based on a ray-optics approach or wave-optics approach.

Referring to the ray optics, distance "D" can be determined as follows: assume that the cladding of fiber 160 has "t" thickness. With stray high NA rays 104 being blocked by the end of ferule channel 150 and reflected away, amount of high NA rays 102' entering into optical fiber 160 has a reverse relationship with the depth "D." With the larger "D", the entrance faucet of the MM passive optical fiber 160 is located further inside the ferule channel reducing, thus, the number of stray light rays that can enter into the cladding and/or cladding-core interface of the optical fiber. For a given target numerical aperture ("NA"), and known thickness t of cladding, the desired distance "D" can be determined as disclosed below.

To prevent generation of HOMs, high NA rays 102' should be prevented from coupling into core 140. Accordingly, knowing a target angle "φ", it is possible to determine distance "D" in accordance with the following:

$$\tan\varphi = t/D$$

From the above relations, distance "D" can be determined as

$$D = t/\tan\varphi$$

The "φ" angle is determined as follows:

$$\varphi = \arcsin(NA/n),$$

Wherein n is refractive index of air and therefore equal to 1, NA is a desired target NA.
From the above, it follows that

$$D = t/\tan(\arcsin NA)$$

where D is the distance at which the entry faucet of the optical fiber is located from the open edge of the ferule channel, t is the cladding thickness of the optical fiber. Thus, for a certain desired target NA, for example, 0.135, and t-10μm, the entry faucet of optical fiber needs to be at a distance D=73 μm from the ferule channel opening end. D is easily calculated and can be precisely controlled. This improvement enables a high power laser diode pump module be manufactured with high precision, high reproducibility and automation, but less cost. From the wave-optics stand point, the required depth can be obtained from the beam waist calculations within the Rayleigh region of the focused beams which brings the same result as discussed above.

**Figure 5** illustrates a modification of an end coated surface 170 of ferrule 150. Referring to Figure 4, the faucet of the ferrule's end surface extends in a plane extending substantially perpendicularly to an axis A-A of the fiber. In this configuration, back-reflected rays are incident on focusing components and may create a thermo-related problem causing elevated temperatures which may be detrimental to these and other upstream components. To avoid such an undesirable back-reflection, coated end surface 170 has a generally conical which reflects high NA rays 104, incident thereon, at such an angle that reflected rays 180 do not impinge upon the upstream components.

The above-disclosed structure is disclosed with a light source configured as a laser diode module emitting high power, bright MM light. However, as readily recognized by one of ordinary skill the laser art, the light source may have a variety of configurations including for example a fiber, collimator and others.

Having described at least one of the preferred embodiments of the present invention with reference to the accompanying drawings, it will be apparent to those skilled in the art that the invention is not limited to those precise embodiments, and that various modifications and variations can be made in the presently disclosed system without departing from the scope of the invention. Thus, it is intended that the present disclosure cover modifications and variations of this disclosure provided they come within the scope of the appended claims.

**Claims**

1. An optical system, comprising:

   a focusing component configured to focus a beam incident thereon so that the focused beam includes a plurality of rays converging towards an axis at an angle range including small numerical aperture ("NA") rays, which are at most equal to a target NA, and another angle range including high NA rays which are at least equal to the target NA;
   a ferrule having an inner surface defining an inner central channel;
   an optical fiber extending coaxially with and disposed in the central channel with an upstream end of the fiber being spaced inwards from an upstream end of the ferrule at a predetermined distance "D" to create a void at a terminus of the ferrule, wherein substantially only the small NA rays enter the terminus and are coupled into a core of the fiber, wherein the high NA rays are reflected from the upstream end of the ferrule.

2. The optical system of Claim 1, wherein a terminal surface of the upstream end of the ferrule is coated with a layer of reflective material,

3. The optical system of Claim 2, wherein the reflective material includes a dielectric or metallic or ceramic or a combination of these.

4. The optical system of Claim 1, wherein the upstream ends of respective ferrule and fiber are spaced from one another at the distance D determined in accordance with a following relationship:

$$D = t/\tan(\arcsin NA),$$

wherein NA is the target NA, t is a thickness of fiber cladding, and n is a refractive index of ambient air equal to 1.

5. The optical system of Claim 4, wherein the upstream end of the fiber spaced at the determined distance D lies within a Rayleigh region of the focused beam.

6. The optical system of claim 1 further comprising a light source including a high power laser diode module configured with a plurality of light emitters which output respective substantially parallel output beams incident on the focusing component, the focusing component being a focusing lens.

7. A method of coupling a light beam into a multimode fiber, comprising the steps of:

   converging the light beam by a focusing lens towards an axis thereof, thereby providing a plurality of rays with relatively small numerical apertures ("NAs") which are at most equal to a target NA and a plurality of rays with relatively large NAs which are at least equal to the target NA;
   inserting the multimode fiber into a ferrule so as to create a void at a terminus of the ferrule, and displacing the ferrule and lens relative to one another at a predetermined distance "D" relative to one another, thereby coupling substantially only the rays with respective small NA into a core of the fiber while reflecting the rays with respective relatively large NAs from a terminal surface of the ferrule so as to minimize excitation of peripheral core and cladding high order modes.

8. The method of claim 7, wherein the focusing lens and the fiber are aligned.

9. The method of Claim 7, wherein the terminal surface of the ferrule is coated with a layer of highly reflective material.

10. The method of Claim 9, wherein the highly reflective material is either a dielectric material or metallic or ceramic.

11. The method of Claim 7, wherein the predetermined distance "D" is determined as D=t/tan (arcsin (NA/n), wherein NA is a desired numerical aperture and t is a thickness of a cladding of the fiber.

12. The method of claim 7, wherein the terminal surface lies in a plane extending substantially perpendicular to the axis.

13. The method of claim 7, wherein the terminal surface has a generally frustoconical shape expanding away from the optical component so as to reflect the high NA rays incident thereon away from the optical component.

**Patentansprüche**

1. Optisches System, das umfasst:

eine Fokussierungskomponente, die dafür konfiguriert ist, ein darauf auffallendes Strahlenbündel in der Weise zu fokussieren, dass das fokussierte Strahlenbündel mehrere Strahlen enthält, die unter einem Winkelbereich, der Strahlen mit kleiner numerischer Apertur ("NA"), die höchstens gleich einer Ziel-NA ist, enthält, und unter einem anderen Winkelbereich, der Strahlen mit hoher NA, die wenigstens gleich der Ziel-NA ist, enthält, in Richtung einer Achse konvergieren;
eine Endhülse mit einer Innenoberfläche, die einen zentralen Innenkanal definiert;
eine optische Faser, die koaxial mit dem zentralen Kanal verläuft und in ihm angeordnet ist, wobei ein einlassseitiges Ende der Faser von einem einlassseitigen Ende der Endhülse in einem vorgegebenen Abstand "D" nach innen beabstandet ist, um an einer Endeinrichtung der Endhülse einen Hohlraum zu erzeugen, wobei im Wesentlichen nur die Strahlen mit kleinem NA in die Endeinrichtung eintreten und in einen Kern der Faser gekoppelt werden, wobei die Strahlen mit hohem NA von dem einlassseitigen Ende der Endhülse reflektiert werden.

2. Optisches System nach Anspruch 1, wobei die Endeinrichtungsoberfläche des einlassseitigen Endes der Endhülse mit einer Schicht eines reflektierenden Materials beschichtet ist.

3. Optisches System nach Anspruch 2, wobei das reflektierende Material ein dielektrisches oder ein metallisches oder ein keramisches oder eine Kombination von diesen enthält.

4. Optisches System nach Anspruch 1, wobei die einlassseitigen Enden der Endhülse bzw. der Faser in dem Abstand D voneinander beabstandet sind, der gemäß der folgenden Formel bestimmt ist:

$$D = t/\tan(\arcsin NA),$$

wobei NA die Ziel-NA ist, t die Dicke des Fasermantels ist und n ein Brechungsindex der Umgebungsluft gleich 1 ist.

5. Optisches System nach Anspruch 4, wobei das einlassseitige Ende der Faser, das in der vorgegebenen Entfernung D beabstandet ist, in einem Rayleigh-Gebiet des fokussierten Strahlenbündels liegt.

6. Optisches System nach Anspruch 1, das ferner eine Lichtquelle umfasst, die ein Hochleistungs-Laserdiodenmodul enthält, das mit mehreren Lichtemittern konfiguriert ist, die jeweils im Wesentlichen parallele Ausgangsstrahlenbündel ausgeben, die auf die Fokussierungskomponente auffallen, wobei die Fokussierungskomponente eine Fokussierungslinse ist.

7. Verfahren zum Koppeln eines Lichtstrahlenbündels in eine Mehrmodenfaser, wobei das Verfahren die folgenden Schritte umfasst:

Konvergierenlassen des Lichtstrahlenbündels durch eine Fokussierungslinse in Richtung einer Achse davon, dadurch Bereitstellen mehrerer Strahlen mit verhältnismäßig kleinen numerischen Aperturen ("NAs"), die höchstens gleich einer Ziel-NA sind, und mehrerer Strahlen mit verhältnismäßig großen NAs, die wenigstens gleich der Ziel-NA sind;
Einführen der Mehrmodenfaser in eine Endhülse, um an einer Endeinrichtung der Endhülse einen Hohlraum zu erzeugen, und
Verlagern der Endhülse und der Linse zueinander in einen vorgegebenen Abstand "D" relativ zueinander, dadurch Koppeln im Wesentlichen nur der Strahlen mit jeweils kleiner NA in einen Kern der Faser, während die Strahlen mit verhältnismäßig großen NAs von einer Endeinrichtungsoberfläche der Endhülse reflektiert werden, um die Erregung von Moden höherer Ordnung des peripheren Kerns und des Mantels zu minimieren.

8. Verfahren nach Anspruch 7, wobei die Fokussierungslinse und die Faser ausgerichtet sind.

9. Verfahren nach Anspruch 7, wobei die Endeinrichtungsoberfläche der Endhülse mit einer Schicht eines stark reflektierenden Materials beschichtet ist.

**10.** Verfahren nach Anspruch 9, wobei das stark reflektierende Material entweder ein dielektrisches Material oder ein metallisches oder ein keramisches ist.

**11.** Verfahren nach Anspruch 7, wobei der vorgegebene Abstand "D" als D = t/tan(arcsin(NA/n)) bestimmt wird, wobei NA eine gewünschte numerische Apertur ist und t eine Dicke eines Mantels der Faser ist.

**12.** Verfahren nach Anspruch 7, wobei die Endeinrichtungsoberfläche in einer Ebene liegt, die im Wesentlichen senkrecht zu der Achse verläuft.

**13.** Verfahren nach Anspruch 7, wobei die Endeinrichtungsoberfläche allgemein eine Kegelstumpfform aufweist, die von der optischen Komponente weg aufgeweitet ist, um die darauf auffallenden Strahlen mit hohem NA von der optischen Komponente weg zu reflektieren.

**Revendications**

**1.** Un système optique comprenant :

un composant de focalisation configuré pour focaliser un faisceau incident sur celui-ci de façon à ce que le faisceau focalisé englobe une pluralité de rayons convergeant vers un axe à une étendue d'angle comprenant des rayons avec de petites ouvertures numériques (« NA ») qui sont au plus égales à une NA cible et une autre étendue d'angle comprenant des rayons avec de grandes NA qui sont au moins égales à la NA cible,
une virole ayant une surface intérieure définissant un canal central intérieur,
une fibre optique s'étendant coaxialement avec et
disposée dans le canal central avec une extrémité amont de la fibre étant espacée vers l'intérieur depuis une extrémité amont de la virole à une distance « D » prédéterminée pour créer un vide à une extrémité de la virole, seulement les rayons avec de petites NA entrant substantiellement dans l'extrémité et étant couplés dans un noyau de la fibre, les rayons avec de grandes NA étant réfléchis depuis l'extrémité amont de la virole.

**2.** Le système optique de la revendication n°1, une surface terminale de l'extrémité amont de la virole étant revêtue d'une couche de matière réfléchissante.

**3.** Le système optique de la revendication n°2, la matière réfléchissante comprenant un matériau diélectrique ou métallique ou céramique ou une combinaison de ceux-ci.

**4.** Le système optique de la revendication n°1, les extrémités amont respectives de la virole et de la fibre étant espacées l'une de l'autre à la distance D déterminée conformément à un rapport suivant :

$$D = t/\tan(\arcsin NA),$$

NA étant la NA cible, t étant une épaisseur de la gaine de fibre et n étant un indice de réfraction de l'air ambiant égal à 1.

**5.** Le système optique de la revendication n°4, l'extrémité amont de la fibre espacée à la distance déterminée D se situant dans une zone de Rayleigh du faisceau focalisé.

**6.** Le système optique de la revendication n°1 comprenant en plus une source de lumière englobant un module à diode laser à haute puissance configuré avec une pluralité d'émetteurs de lumière qui émettent des faisceaux de sortie respectifs, substantiellement parallèles, incidents sur le composant de focalisation, le composant de focalisation étant une lentille de focalisation.

**7.** Une méthode de couplage d'un faisceau lumineux dans une fibre multimode, comprenant les étapes suivantes :

la convergence du faisceau lumineux par une lentille de focalisation vers un axe de celui-ci, fournissant ainsi une pluralité de rayons avec des ouvertures numériques (« NAs ») relativement petites, lesquelles sont au plus égales à une NA cible, et une pluralité de rayons avec des NAs relativement grandes, lesquelles sont au moins égales à la NA cible,
l'insertion de la fibre multimode dans une virole en vue de créer un vide à une extrémité de la virole et
le déplacement de la virole et de la lentille l'une par rapport à l'autre à une distance « D » prédéterminée l'une par rapport à l'autre, couplant ainsi substantiellement seulement les rayons avec des NA relativement petites dans un noyau de la fibre tout en réfléchissant les rayons avec des NAs respectives relativement grandes depuis une surface terminale de la virole afin de minimiser l'excitation de modes d'ordre élevé du noyau périphérique et de la gaine.

**8.** La méthode de la revendication n°7, la lentille de focalisation et la fibre étant alignées.

**9.** La méthode de la revendication n°7, la surface terminale de la virole étant revêtue d'une couche de matière hautement réfléchissante.

10. La méthode de la revendication n°9, la matière hautement réfléchissante étant un matériau diélectrique ou métallique ou céramique.

11. La méthode de la revendication n°7, la distance « D » prédéterminée étant déterminée comme D = t/tan (arcsin (NA/n), NA étant une ouverture numérique désirée et t une épaisseur d'une gaine de la fibre.

12. La méthode de la revendication n°7, la surface terminale étant située dans un plan s'étendant de façon substantiellement perpendiculaire à l'axe.

13. La méthode de la revendication n°7, la surface terminale ayant une forme généralement tronconique s'étendant depuis le composant optique afin de réfléchir les rayons avec de grandes NA, incidents sur celui-ci depuis le composant optique.

FIG. 1  (Prior Art)

FIG. 2 (prior art)

FIG. 3

EP 2 856 584 B1

FIG. 4

FIG. 5

12